# EUROPÄISCHE PATENTSCHRIFT

(11) **EP 1 285 187 B1**
(45) Veröffentlichungstag und Bekanntmachung des Hinweises auf die Patenterteilung: **16.07.2008**
(21) Anmeldenummer: 01915061.4
(22) Anmeldetag: 28.02.2001
(51) Int. Cl.: F16K 11/048, F16K 31/06

(54) **VENTIL**
VALVE
SOUPAPE

(30) Priorität: 12.05.2000 DE 10023329
(43) Veröffentlichungstag der Anmeldung: 26.02.2003
(73) Patentinhaber: ROBERT BOSCH GMBH, 70442 Stuttgart (DE)
(72) Erfinder: HESS, Juergen, 76534 Baden-Baden (DE); REEB, Georg, 77815 Buehl-Eisental (DE)
(86) Internationale Anmeldenummer: PCT/DE2001/000757
(87) Internationale Veröffentlichungsnummer: WO 2001/086178

(56) Entgegenhaltungen:
- EP-A- 0 701 053
- DE-A- 19 753 575
- US-A- 3 891 180
- US-A- 5 944 053

## Beschreibung

### Stand der Technik

Die Erfindung geht aus von einer Ventil-Auschlussschlauch-Kombination nach der Gattung des unabhängigen Anspruchs 1.

Ventile sind beispielsweise aus der DE 197 53 575 A1 bekannt. Bei dem in der DE 197 53 575 A1 beschriebenen Ventil handelt es sich um ein magnetisches Bypass-Ventil für eine flüssigkeitsgeregelte Heiz- beziehungsweise Kühlanlage. Zwei auf einer Hubstange des Ventils befestigte Ventilglieder regeln den Durchfluss zwischen einem Einlasskanal und zwei Auslasskanälen, wobei einer dieser Auslasskanäle die Funktion eines Bypass-Kanals im Heiz- bzw. Kühlkreislauf übernimmt. Ein Nachteil des in der DE 197 53 575 A1 beschriebenen Ventils ist die große Baulänge des Ventils, die einen entsprechend großen Einbauraum für das Ventil beansprucht.

Ein weiterer Nachteil des in der DE 197 53 575 A1 beschriebenen Ventils ist, dass das den Durchfluss steuernde Ventilglied in dieser Art von Ventilen selbst als Hindernis für die Strömung im Ventil wirkt und so den Strömungsquerschnitt im Bereich des Ventilsitzes beeinflusst. Eine mögliche und bekannte Lösung dieses Problems ist die Vergrößerung des Durchmessers des Auslasskanals des Ventils. Solch eine Vergrößerung des Auslasskanals bedeutet wiederum eine Vergrößerung des benötigten Einbauvolumens für das Ventil. Nachteilig kommt weiter hinzu, dass dann der Einlass- und der Auslass-Kanal des Ventils unterschiedliche Durchmesser bekommen. Das zieht die Verwendung von unterschiedlichen Anschlussschläuchen für das Ventil nach sich, was das System unnötigerweise verkompliziert.

Will man letzteres Problem der Anschlussdurchmesser wiederum beheben, so kann man natürlich den Auslasskanal erst in seinem Durchmesser vergrößern, um den Strömungsquerschnitt um das Ventilglied herum konstant zu halten und anschließend den Durchmesser wieder auf die gewünschte Schlauchgröße reduzieren. Abgesehen davon, dass diese recht umständliche Lösung eine aufwendige und damit kostenintensive Konstruktion bedeutet, zieht sie auch unweigerlich wieder eine Vergrößerung der Baulänge des Ventils nach sich mit den bekannten Folgen für das Einbauvolumen des Ventils.

Die beschriebene Anpassung der Strömungsquerschnitte des Ventils ist umständlich, aufwendig und damit zu teuer für die Massenproduktion.

Aus der EP 0 701 053 A2 ist ein Abgasrückführungsventil bekannt, welches ein Ventilgehäuse mit einem Einlasskanal sowie einem Auslasskanal aufweist. Die Verbindung zwischen dem Einlasskanal und dem Auslasskanal kann durch ein Ventilglied gesperrt bzw. geöffnet werden, welches durch einen elektromagnetischen Aktuator betätigt wird. Dabei wirkt das Ventilglied mit einem Ventilsitz zusammen, welcher als individuelles Bauteil in eine flanschartige Öffnung, welche ein Ende des Ventilgehäuses bildet, eingesetzt ist. Ventilglied und Ventilsitz der EP 0 701 053 A2 sind derart ausgestaltet, dass sie eine hoch aufgelöste Durchflusskurve zur Maximierung der Flexibilität des Abgasrückführungsventils und dessen Durchflussanforderungen gewährleisten. Darüber hinaus minimiert das Ventilprofil der EP 0 701 053 A2 Turbulenzen des Abgasflusses.

Das Abgasrückführungsventil der EP 0 701 053 A2 wird unter Zwischenschaltung eines Dichtmittels direkt auf dem Motorgehäuse eines Verbrennungsmotors befestigt, so dass das Ventilglied bei geöffnetem Abgasrückführungsventil ein Stück weit in das Motorgehäuse eintaucht.

Aus der US 3,891,180 ist ein Niederdruckflüssigkeitsspenderventil bekannt, dessen Ventilglied bei geschlossenem Ventil ein Stück weit in den Auslasskanal hineinreicht und bei Betätigung des Ventils aus dem Auslasskanal heraus geschoben wird. Dabei ist das Ventilglied der US 3,891,180 derart ausgestaltet, dass dieses einen konvergierenden Flüssigkeitsstrom ausgangs des Ventils erzeugt.

### Vorteile der Erfindung

Die erfindungsgemäße Ventil-Anschlussschlauch-Kombination mit den Merkmalen des Hauptanspruchs hat unter anderem den Vorteil, dass die Baulänge des Ventils und damit verbunden das Einbauvolumen des Ventils verringert werden kann.

Die hier vorgeschlagene, erfindungsgemäße Ventil-Anschlussschlauch-Kombination öffnet sich so, dass der Ventilkegel aus dem Ventilgehäuse hervortritt. Damit ergibt sich zum einen eine Reduzierung der Baulänge des Ventils und gleichzeitig zum anderen die Möglichkeit eine Vergrößerung des Strömungsdurchmessers im Bereich des Ventilkegels zu erzielen. Eine aufwendige Querschnittsanpassung innerhalb des Ventilgehäuses, die bisher zur Anpassung des Strömungsquerschnittes im Ventil notwendig war, entfällt.

Der Ventilsitz des Ventils ist vorteilhafter Weise an einem Ende des Ventilgehäuses angebracht. Dadurch kann sich das Ventilglied beim Öffnen des Ventils aus dem Ventilgehäuse heraus bewegen und in einen vorhandenen Anschlussschlauch hineinfahren.

Der Anschlussschlauch des Ventils zu den weiteren Komponenten des jeweiligen Systems wird im erfindungsgemäßen Ventil genutzt, um dem Ventilglied beim Öffnen den notwendigen Platz zu geben: wenn das Ventil öffnet, fährt das Ventilglied aus dem Ventilgehäuse heraus und in den über den Auslass-Kanal geschobenen Anschlussschlauch hinein. Der auf dem Auslasskanal sitzende Anschlussschlauch liefert eine Querschnittsvergrößerung, die im Ventil genutzt wird, um ein entsprechend vergrößertes Strömungsvolumen im Bereich des geöffneten Ventilgliedes zur Verfügung zu stellen. So kann erreicht werden, dass der Strömungsquerschnitt des durch das Ventil strömenden Mediums im Bereich des Ventilgliedes ungefähr gleich ist dem Strömungsquerschnitt vor dem Ventilglied. Das so im Wesentlichen konstante Strömungsvolumen im Ventil minimiert den Druckabfall über dem Ventil. Einen zu großen Druckabfall über dem Ventil gilt es zu vermeiden.

Da im Ventilgehäuse selbst keine Anpassung des Strömungsvolumens vorgenommen werden muss, kann die Konstruktion des Ventils relativ einfach gehalten werden. Insbesondere kann auch eine Vergrößerung des Auslasskanalsdurchmessers des Ventils zur Erhöhung des Strömungsquerschnittes im Bereich des Ventilgliedes verzichtet werden. Dies ist eine deutliche Vereinfachung des Ventils, da die notwendige, sich anschließende, erneute Reduzierung des Durchmessers zur Anpassung der Anschlussquerschnitte ebenfalls entfallen kann. Das erfindungsgemäße Ventil ermöglicht so die Verwendung von Schlauchmaterial nur eines Durchmessers, bzw. erübrigt es aufwendige und kostenträchtige Querschnittsanpassungen, die ebenfalls zu einer Druckänderung über dem Ventil führen können.

Durch die in den weiteren Ansprüchen aufgeführten Maßnahmen sind vorteilhafte Weiterbildungen und Verbesserungen des in Anspruch 1 angegebenen Ventils möglich.

Die Ventilsitze des Ventils können einstückig in dem Ventilgehäuse ausgeformt werden, was eine zusätzliche Vereinfachung des Aufbaus und damit eine weitere Senkung der Produktionskosten des erfindungsgemäßen Ventils bedeutet. Insbesondere kann der Ventilsitz am Ende des Ventilgehäuses angeordnet sein. Je nach Ausgestaltung des Ventilgliedes tritt dieses dann beim Öffnen des Ventils aus dem Ventilgehäuse mehr oder weniger oder im Extremfall auch gar nicht hervor.

Das Ventil, das die bei der Umströmung des Ventilkegels notwendige Vergrößerung des Ventilkanaldurchmessers in den Anschlussschlauch hinein verlegt, gewährleistet somit den erforderlichen Strömungsquerschnitt bei gleichzeitiger Reduzierung der Baulänge des Ventils.

### Zeichnung

In der Zeichnung ist ein Ausführungsbeispiel der Erfindung dargestellt, das in der nachfolgenden Beschreibung näher erläutert wird.

Es zeigen:
Fig. 1 einen Querschnitt durch ein Ventil und
Fig. 2 einen Ausschnitt des Querschnittes des Ventils gemäß Figur 1 bei geöffneter Ventilstellung.

### Beschreibung des Ausführungsbeispiels.

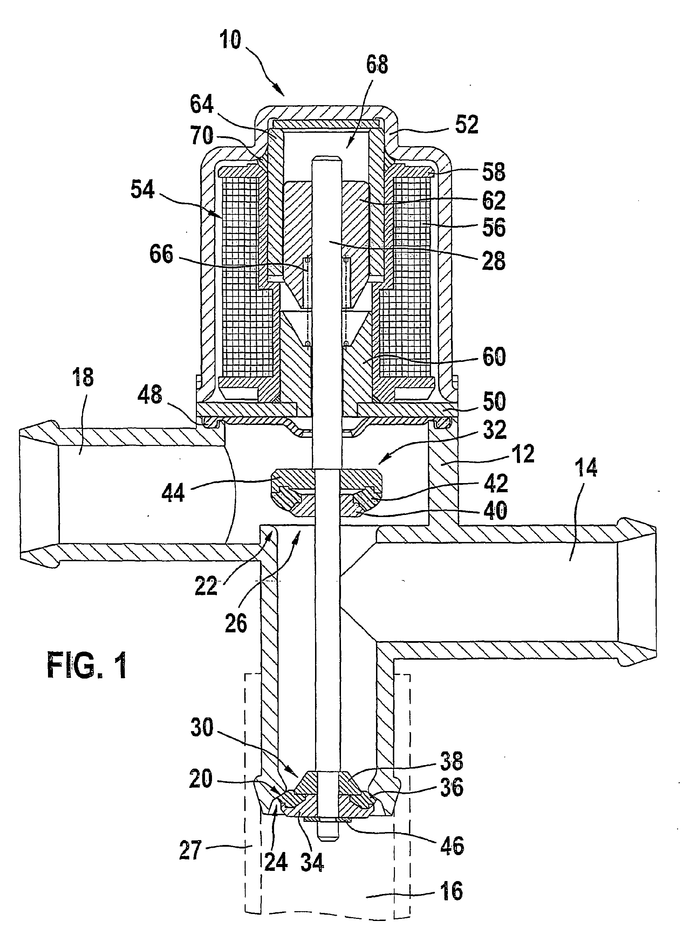

Das in Figur 1 im Querschnitt dargestellte, Ventil 10 besitzt ein Ventilgehäuse 12, in das ein Einlasskanal 14, ein erster Auslasskanal 16 und ein zweiter Auslasskanal 18 führt. Das Ventilgehäuse 12 trägt in dem dargestellten Ausführungsbeispiel zwei Ventilsitze 20 und 22. Die Ventilsitze 20 beziehungsweise 22 des Ventils 10 sind in dem gezeigten Ausführungsbeispiel einstückig aus dem Ventilgehäuse 12 ausgeformt und haben je eine Ventilöffnung 24 beziehungsweise 26. Zwischen den Ventilsitzen 22 und 24 des Ventils 10 mündet der Einlasskanal 14 in das Ventilgehäuse 12. Die Ventilöffnung 24 verbindet den Einlasskanal 14 mit dem ersten Auslasskanal 16 und einem Anschlussschlauch 27. Dieser Anschlussschlauch 27 ist über die Ventilöffnung 24 geschoben und verlängert den Auslasskanal 16 des Ventils 10. Die Ventilöffnung 26 verbindet den Einlasskanal 14 mit dem zweiten Auslasskanal 18.

Durch das Ventilgehäuse 12 führt eine Hubstange 28, mit einem ersten Ventilglied 30 - in der Figur 1 das untere Ventilglied -, das sich im ersten Auslasskanal 16 auf der, dem Einlasskanal 14 abgewandten Seite des Ventilsitzes 20 befindet. Das Ventilglied 30 besteht aus einem unteren Dichtkegel 34 auf der dem Einlasskanal 14 abgekehrten Seite des Ventilgliedes 30 und einem oberen Dichtkegel 38 auf der dem Einlasskanal 14 zugekehrten Seite des Ventilgliedes 30. Zwischen den beiden Dichtkegeln 34 und 38 des Ventilgliedes 30 ist ein elastisches Dichtelement 36 eingelegt. Das Ventilglied 30 wirkt mit dem Ventilsitz 20 des Ventilgehäuses 12 zusammen und steuert den ersten Auslasskanal 16. So ist der Auslasskanal 16 beispielsweise geschlossen - wie in Figur 1 dargestellt -, wenn das Dichtelement 36 des Ventilgliedes 30 fest auf dem Ventilsitz 20 aufsitzt. Das Ventilglied 30 ist in der erfindungsgemäßen Ausführung des Ventils gegen die Hubstange 28 durch eine Sicherungsscheibe 46 gesichert. Auch eine Befestigung durch Verstemmen des Dichtkegels 34 in einer Nut der Hubstange 28 oder durch Material der Hubstange 28, das gegen das Ventilglied 30 gedrückt wird, ist möglich.

An der, dem Einlasskanal 14 abgewandten Seite des Ventilsitzes 22 trägt die Hubstange 28 ein zweites Ventilglied 32. Das Ventilglied 32, das zwischen dem Einlasskanal 14 und dem zweiten Auslasskanal 18 vermittelt, besteht ebenfalls aus einem unteren, dem Einlasskanal zugewandten Dichtkegel 40 und einem oberen, dem zweiten Auslasskanal 18 zugewandten Dichtkegel 44. Zwischen den beiden Dichtkegeln 40 und 44 des Ventilgliedes 32 ist ein elastisches Dichtelement 42 eingelegt.

Das dem ersten Ventilglied 30 entgegengesetzte Ende der Hubstange 28 - in der Figur 1 ist es das obere Ende - ist durch eine Dichtmanschette 48, die an der Hubstange 28 anliegt und durch eine Stützwand 50 hindurch aus dem Ventilgehäuse 12 herausgeführt und mündet in ein Spulengehäuse 52.

Im Spulengehäuse 52 befindet sich eine elektromagnetische Spule 54 mit Wicklungen 56 auf einem Spulenträger 58 sowie ein Magnetkern 60. Das in das Spulengehäuse geführte Ende der Hubstange 28 trägt einen Anker 62, der fest mit der Hubstange 28 verbunden ist und zusammen mit der Hubstange 28 in axialer Richtung in einer Ankerführung 64 im Innern der Spule 54 bewegbar ist. Am Anker 62 sind Stützfedern 66 angebracht, die gegen den Magnetkern 60 der Spule 54 wirken. Der Anker 62 und die darin fixierte Hubstange 28 sind von den Wicklungen 56 der Spule 54 umgeben. Die elektromagnetische Spule 54 bildet in Verbindung mit einem durch die Wicklungen 56 der Spule 54 fließenden elektrischen Strom und dem an der Hubstange 28 befestigten Anker den Aktuator 68 des Ventils 10 in diesem Ausführungsbeispiel. Je nach Stromfluss durch die Wicklungen 56 der Spule 54 nimmt der Anker 62 und damit die am Anker befestigte Hubstange 28 mit ihren Ventilgliedern 30 und 32 unterschiedliche Schaltpositionen des Ventils 10 ein. Das ankerseitige Ende der Hubstange 28 und die, dieses Ende umgebende Spule 54 sind durch das Spulengehäuse 52 nach aussen gesichert. Ein O-Ring 70.dichtet die Ankerführung 64 sowie den Spulenträger 58 gegen das Spulengehäuse 52 ab. Das Spulengehäuse 52 ist über die Stützwand 50 am Ventilgehäuse 12 befestigt.

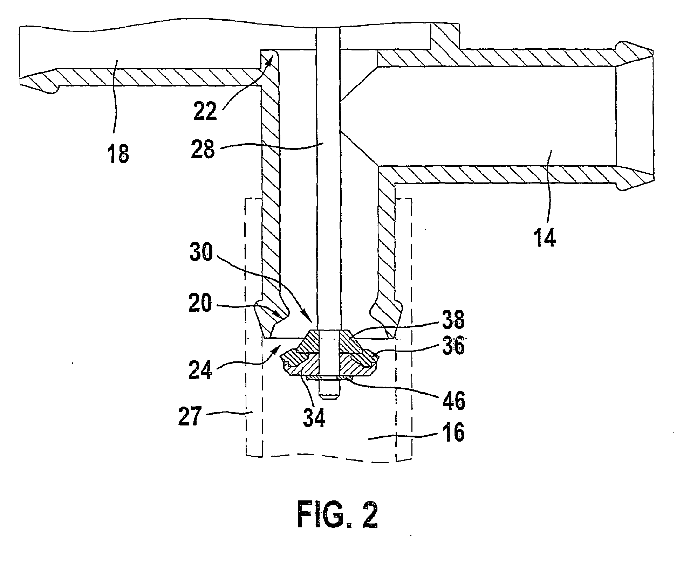

Figur 2 zeigt einen Auschnitt des Querschnittes des Ventils 10 bei geöffnetem ersten Auslasskanal 16. Dargestellt ist der Einlasskanal 14 und der Auslasskanal 16. Ebenfalls zu sehen ist das unterer, dem Aktuator abgekehrte Ende der Hubstange 28 mit dem Ventilglied 30.

Das Dichtelement 36 des Ventilgliedes 30 ist in dieser Darstellung des Ventils 10 durch Betätigung des Aktuator 68 vom Ventilsitz 20, der hier direkt am Ende des Ventilgehäuses 12 ausgebildet ist, abgehoben worden und gibt die Ventilöffnung 24 frei. Das an der Hubstange 28 befestigte Ventilglied 30 tritt dazu aus dem Auslasskanal 16 und damit insgesamt aus dem Ventilgehäuse 12 des Ventils 10 heraus und wird derart in den Anschlussschlauch 27 geführt, dass der größere Querschnitt des in diesem Ausführungsbeispiel über den Auslasskanal 16 geschobenen Anschlussschlauches 27 einen größeren Strömungsquerschnitt um das Ventilglied 30 herum ermöglicht. Zum Schließen des Ausslasskanals 16 wird das Ventilglied 30 wieder aus dem Schlauch 27 heraus und zurück auf den innenseitig am Ventilgehäuse 12 des Ventils 10 ausgebildeten Ventilsitz 20 gezogen.

Die Erfindung ist nicht auf das beschriebene Ausführungsbeispiel eines elektromagnetischen Ventils mit zwei Ventilgliedern beschränkt.

Sie lässt sich ebenso vorteilhaft auch bei einem Ventil verwirklichen, das nur einen Auslasskanal besitzt und somit auch nur ein Ventilglied auf der Hubstange trägt. Das Ventilgehäuse selbst kann in anderen Ausführungsbeispielen auch zusätzlich noch eine speziell ausgeformte Ventilkammer besitzen.

Das Ventil ist nicht beschränkt auf die Verwendung von einstückig am Ventilgehäuse ausgebildeten Ventilsitzen. Die Form und das Material sowohl der Ventilsitze als auch der Ventilglieder können in anderen Ausführungsformen des Ventils variiert werden.

## Patentansprüche

1. Ventil-Anschlussschlauch-Kombination, mit einem Ventil (10) mit einem Ventilgehäuse (12), mit mindestens einem Einlass-Kanal (14) und mindestens einem Auslass-Kanal (16), ferner mit einer bewegbaren Hubstange (28), deren eines Ende in einen elektromagnetischen Aktuator (68) mündet, sowie mit mindestens einem auf der Hubstange (28) befestigten Ventilglied (30), das mit mindestens einem Ventilsitz (20) zusammenwirkt, wobei das mindestens eine Ventilglied (30) beim Öffnen des Ventils (10) aus dem Ventilgehäuse (12) hervortritt, sowie mit einem auf einem Auslass-Kanal (16) des Ventils aufsitzenden Anschlussschlauch (27), wobei das mindestens eine Ventilglied (30) beim Öffnen des Ventils (10) so weit aus dem Ventilgehäuse (12) hervortritt und in den auf dem Auslass-Kanal (16) sitzenden Anschlussschlauch (27) eintritt, dass der Strömungsquerschnitt eines durch das Ventil (10) strömenden Mediums im gehäuseseitigen Auslasskanal (16) des Ventils (10) einerseits und zwischen Ventilglied (30) und Anschlussschlauch (27) andererseits im Wesentlichen gleich ist.

2. Ventil-Anschlussschlauch-Kombination nach Anspruch 1, **dadurch gekennzeichnet, dass** die Durchmesser des Einlass-Kanals (14) und des mindestens einen Auslasskanals (16) des Ventils (10) ungefähr gleich groß sind.

3. Ventil-Anschlussschlauch-Kombination nach Anspruch 2, **dadurch gekennzeichnet, dass** der Ventilsitz (20) des mindestens einen Ventilgliedes (30) einstückig am Ventilgehäuse (12) ausgeformt ist.

4. Ventil-Anschlussschlauch-Kombination nach einem der Ansprüche 1 - 3, **dadurch gekennzeichnet, dass** das Ventilgehäuse (12) einen zweiten Auslasskanal (18) mit zugehörigem Ventilglied (32) und Ventilsitz (22) hat.

5. Ventil-Anschlussschlauch-Kombination nach Anspruch 4, **dadurch gekennzeichnet, dass** der Durchmesser des zweiten Auslasskanals (18) des Ventils (10) gleich dem Durchmesser des Einlasskanals (14) des Ventils (10) ist.

6. Ventil-Anschlussschlauch-Kombination nach einem der vorherigen Ansprüche, **dadurch gekennzeichnet, dass** das Ventil (10) zur wasserseitigen Steuerung des Kreislaufes einer Heiz- und/oder Kühlanlage gehört.

7. Ventil-Anschlussschlauch-Kombination nach dem Oberbegriff des Anspruchs 1 und insbesondere nach einem der vorhergehenden Ansprüche, **dadurch gekennzeichnet, dass** der Ventilsitz (20) des mindestens einen Ventilgliedes (30) an einem Ende des Ventilgehäuses (12) angeordnet ist.

## Claims

1. Valve/connecting-hose combination, with a valve (10) having a valve housing (12), with at least one inlet duct (14) and with at least one outlet duct (16), furthermore with a movable lifting rod (28), one end of which issues into an electromagnetic actuator (68), and also with at least one valve member (30) which is fastened on the lifting rod (28) and which co-operates with at least one valve seat (20), the at least one valve member (30) emerging from the valve housing (12) during the opening of the valve (10), and also with a connecting hose (27) seated on an outlet duct (16) of the valve, the at least one valve member (30) emerging, during the opening of the valve (10), from the valve housing (12) and penetrating into the connecting hose (27) seated on the outlet duct (16), to an extent such that the flow cross section of a medium flowing through the valve (10) is essentially identical in the housing-side outlet duct (16) of the valve (10) on the one hand, and between the valve member (30) and the connecting hose (27), on the other hand.

2. Valve/connecting-hose combination according to Claim 1, **characterized in that** the diameters of the inlet duct (14) and of the at least one outlet duct (16) of the valve (10) are of approximately equal size.

3. Valve/connecting-hose combination according to Claim 2, **characterized in that** the valve seat (20) of the at least one valve member (30) is formed in one piece on the valve housing (12).

4. Valve/connecting-hose combination according to one of Claims 1-3, **characterized in that** the valve housing (12) has a second outlet duct (18) with an associated valve member (32) and valve seat (22).

5. Valve/connecting-hose combination according to Claim 4, **characterized in that** the diameter of the second outlet duct (18) of the valve (10) is identical to the diameter of the inlet duct (14) of the valve (10).

6. Valve/connecting-hose combination according to one of the preceding claims, **characterized in that** the valve (10) belongs to the water-side control of the circuit of a heating and/or cooling system.

7. Valve/connecting-hose combination according to the precharacterizing clause of Claim 1 and, in particular, according to one of the preceding claims, **characterized in that** the valve seat (20) of the at least one valve member (30) is arranged at one end of the valve housing (12).

## Revendications

1. Combinaison d'un tuyau de branchement et d'une soupape comprenant une soupape (10) munie d'un boîtier de soupape (12), d'au moins un canal d'entrée (14) et d'au moins un canal de sortie (16) ainsi que d'une tige de commande (28), mobile, dont une extrémité débouche dans un actionneur électromagnétique (68) ainsi qu'avec au moins un organe de soupape (30) fixé sur la tige de commande (28), coopérant avec au moins un siège de soupape (20),
au moins cet organe de soupape (30)avançant hors du boîtier de soupape (12) lors de l'ouverture de la soupape (10), ainsi qu'un tuyau de branchement (27) appliqué sur un canal de sortie (16) de la soupape,
au moins l'organe de soupape (30), à l'ouverture de la soupape (10), avançant suffisamment du boîtier de soupape (12) et pénétrant dans le tuyau de branchement (27) installé sur le canal de sortie (16) pour que la section de passage d'un fluide traversant la soupape (10) d'une part dans le canal de sortie (16) côté boîtier de la soupape (10) et d'autre part, entre l'organe de soupape (30) et le tuyau de branchement (27) soit pratiquement identique.

2. Combinaison d'un tuyau de branchement et d'une soupape selon la revendication 1,
**caractérisée en ce que**
le diamètre du canal d'entrée (14) et celui d'au moins un canal de sortie (16) de la soupape (10) sont sensiblement de même dimension.

3. Combinaison d'un tuyau de branchement et d'une soupape selon la revendication 2,
**caractérisée en ce que**
le siège de soupape (20) au moins de l'organe de soupape (30) est formé en une seule pièce sur le boîtier de soupape (12).

4. Combinaison d'un tuyau de branchement et d'une soupape selon l'une quelconque des revendications 1 à 3,
**caractérisée en ce que**
le boîtier de soupape (12) comporte un second canal de sortie (18) avec un organe de soupape (32) et un siège de soupape (22) correspondant.

5. Combinaison d'un tuyau de branchement et d'une soupape selon la revendication 4,
**caractérisée en ce que**
le diamètre du second canal de sortie (18) de la soupape (10) est égal au diamètre du canal d'entrée (14) de la soupape (10).

6. Combinaison d'un tuyau de branchement et d'une soupape selon l'une quelconque des revendications précédentes,
**caractérisée en ce que**
la soupape (10) fait partie d'une commande côté eau du circuit d'une installation de chauffage et/ou de refroidissement.

7. Combinaison d'un tuyau de branchement et d'une soupape selon le préambule de la revendication 1 et notamment l'une quelconque des revendications précédentes,
**caractérisée en ce que**
le siège de soupape (20) au moins de l'organe de soupape (30) est prévu à une extrémité du boîtier de soupape (12).
